Europäisches Patentamt

European Patent Office    (11) Publication number:    **0 194 235**

Office européen des brevets    **A2**

(12)    # EUROPEAN PATENT APPLICATION

(21) Application number: 86830028.6    (51) Int. Cl.⁴: **A01G 27/00**

(22) Date of filing: 06.02.86

(30) Priority: 07.02.85 IT 1153985 U
         07.02.85 IT 1154085 U

(43) Date of publication of application:
    **10.09.86 Bulletin 86/37**

(84) Designated Contracting States:
    **AT BE CH DE FR GB LI NL SE**

(71) Applicant: F.A.P. di Ermini Franco & Figlio S.n.c.
    **Via di S. Quirico, 33**
    **I-50142 Firenze(IT)**

(72) Inventor: Ermini, Franco
    **Via delle Campora, 19c**
    **I-50124 Firenze(IT)**

(74) Representative: Mannucci, Gianfranco, Dott.-Ing.
    **Ufficio Tecnico Ing. A. Mannucci Via della Scala 4**
    **I-50123 Firenze(IT)**

(54)    A pot holder irrigator with a float feeding from a tank.

㊻    A pot holder irrigator including, in combination with a cup type supporting base (1C-1E) for at least one pot: a reservoir (16) to feed the liquid for the irrigation; a siphon type duct - (10) for the supply, which can bee primed when the reservoir has been completely filled up; and a float (9) with a pin type plug (14) that controls the supply coming from the siphon duct, in order to keep constant the level in the cup of the base supporting the pot or the pots.

FIG.1

## "A POT HOLDER IRRIGATOR WITH A FLOAT FEEDING FROM A TANK"

The invention has the object of assuring a correct and constant watering or irrigation of a plant living in a pot, for household uses or other purposes.

Substantially a pot holder irrigator according to the invention includes, in combination with a cup type supporting base for at least one pot, a float with a needle or pin type obturator or plug which controls the supply of the irrigating liquid to the cup, in order to keep constant the level in the cup, wherein said float floats.

According to a first possible embodiment of the invention, a pot holder irrigator includes, in combination with a cup type supporting base, for at least one pot, a tank or reservoir to feed the liquid for irrigation; a siphon type duct for the supply, which can be primed as the reservoir has been completely filled up; and a float with a pin type plug which controls the supply from the siphon duct in such a way that the level in the cup of the base supporting the pot or pots is kept constant.

Advantageously the reservoir is developed annularly around the cup type base supporting the pot or the pots.

The reservoir can be closed by a grid type cover or equivalent.

In practice the siphon type duct can be mounted on a saddle of the wall of a little well or sump formed along the reservoir and communicating with said cup; in the little well an inserted element is fitted which forms the seat whereon the pin type plug acts and a connection for the siphon type duct. Said inserted element can be adjusted at the proper position in the little well, in order to control the level in the cup supporting the pot or the pots. Said inserted element can be developed as a cap, to form the housing for the float.

The siphon type duct can be mounted on a removable filtering diaphragm, which supports a conical drawing orifice of the siphon type duct.

In a practical embodiment, the float has a central hollow, with a bored bottom wherein the pin type plug is placed; in said hollow an appendix of the inserted element extends, and at the end of said appendix the seat is formed whereon the pin acts.

According to another possible embodiment of the invention, an irrigation plant is provided, especially for a plurality of pot holders irrigators, with a supporting base and a cup for at least one pot, which plant includes in combination: an overhead reservoir or tank, to feed the liquid for the irrigation with a certain hydraulic head; a network of ducts for the distribution of the liquid by fall for the supply, with filtering means; and in combination with each pot holder, a float with a pin type plug, which controls the feeding from the network of the distribution ducts, to keep constant the level in the cup of the base supporting the pot or the pots.

The reservoir can be fed by the water supply network, and kept at constant level through a float and a discharge device for too high level, respectively it can be formed by a can or the like with a siphon that can be primed by a light pressure.

Each duct of the network for the feeding to a respective pot holder can be equipped with a filtering means.

The duct of the distribution network in practice reaches a little well or sump flanking the cup of the supporting base and communicating with said cup; in said well an inserted element which forms the seat whereon the pin type plug acts and the connection for the duct of the network can be fitted; said inserted element can be developed as a cap to form the housing for the float.

Advantageously the float has a central hollow, with bored bottom wherein the pin type plug is placed; in said hollow an appendix of the inserted element extends, and at the end of said appendix the seat is formed whereon the pin or needle acts.

The drawing shows two possible embodiments and in particular:

Figs.1 and 2 show a diametral section view and a plan view of the pot holder according to the invention;

Fig.3 shows an enlarged view of a local section according to III-III of Fig.2;

Figs.4 and 5 show a diametral section view and a plan view of a pot holder according to the invention;

Fig.6 shows an enlarged detail of Fig.4; and

Fig.7 shows a diagram of a plant for the water distribution.

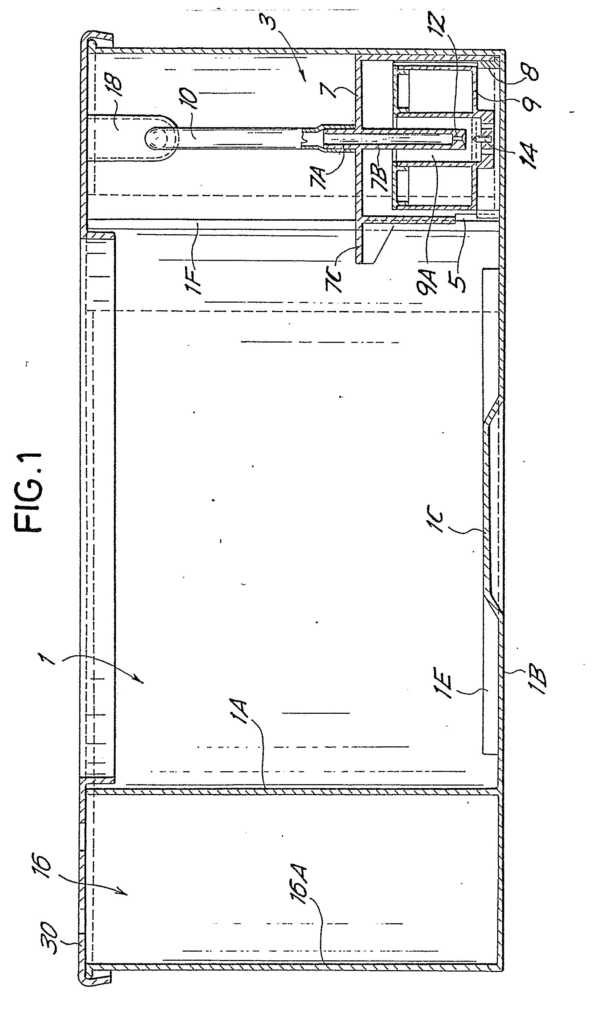

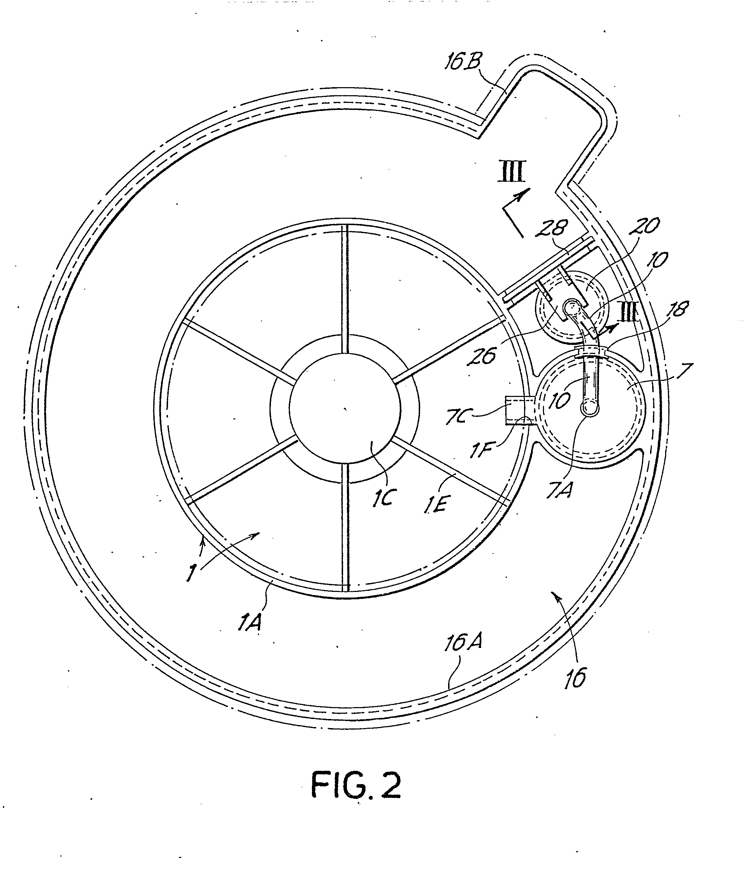

According to what is illustrated in Figs.1 to 3 of the enclosed drawing, numeral 1 indicates the real pot holder having a perimetrical wall 1A and a bottom 1B with a relief 1C and ribs 1E for supporting the pot. Flanking the perimetral wall 1A a little well 3, that is a sump, is developed, that communicates at its lower side with the pot holder 1 through an opening 1F. Inside the little well 3 an inserted element 7 is housed, developed as a cap, which can be put at preset positions depending also on the level that has to be reached inside the pot holder. Said inserted element 7 forms a housing wherein a float 9 can move. The inserted element 7 centrally forms an upper connection 7A for the feeding duct 10 of the liquid for irrigation. On a lower extension 7B of the connection 7A a seat 12 is formed for a needle or pin type plug 14, which plug is carried by the float 9 at the bottom of a central hollow 9A thereof; into said hollow the appendix 7B forming the seat 12 extends.

By this arrangement it is possible to control and maintain inside the pot holder 1 a desired and constant level of water or other irrigating liquid by the effect of the float type plug 9, 14 that interrupts the liquid flow from the feeding duct 10 when the level in the pot holder 1 and then in the little well 3 reaches a preset value depending on the position of seat 12; this position can be adjusted also through the positioning of the inserted element 7, that after the adjustment is kept at a fixed position but can be removed for proper checks and for maintenance.

The pot holder 1 is developed in such a way as to be relatively deep, being the wall 1A substantially cylindrical and equipped with the vertical cleft 1F corresponding to an appendix 7C for maneuvering the inserted element 7, and to an opening 7E for communication.

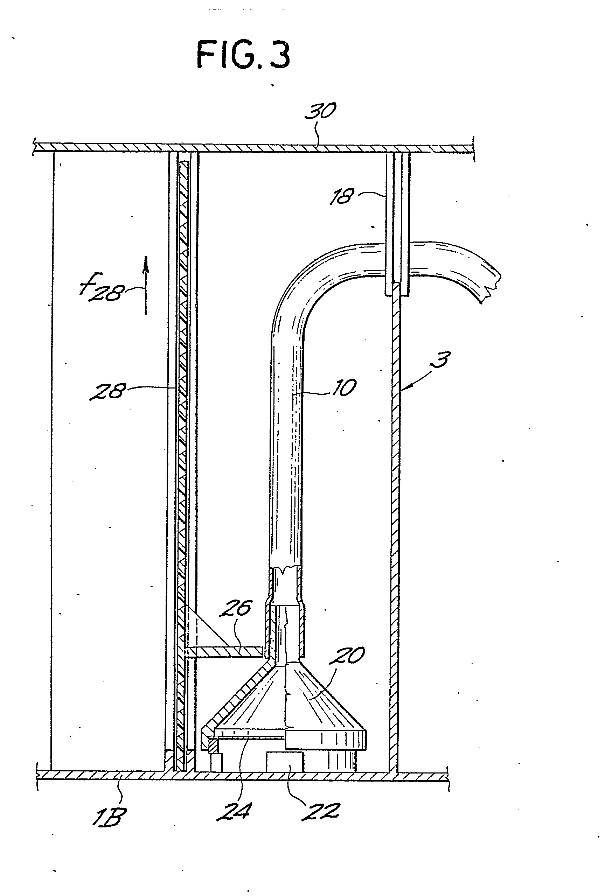

Around the pot holder 1 an annular reservoir 16 is developed, to contain the supply liquid. This reservoir, that is container 16, is interrupted in correspondence to the walls of little well 3; the bottom of the reservoir 16 can be substantially at the same level as the bottom 1B of the pot holder 1 and the little well 3. For the liquid transfer from the reservoir 16 to the little well 3 up to the seat 12 of the float type plug, the duct 10 is developed as a siphon mounted on a saddle 18 formed on the wall of the little well 3. Therefore the duct 10 is U developed, at one side it is engaged to the connection 7A and at the other side (see especially Fig.3) to a little suction cone 20 downward open resting on reliefs 22 of the bottom of container 16 and equipped with a filter 24. The duct 10 can be advantageously flexibly developed and it is supported, along with the little suction cone 20, by a support 26 protruding from a filtrating diaphragm 28; the filtrating diaphragm 28 is inserted as a sash-window in proper seats formed between the external and the internal wall of the reservoir 16. Then by extracting -according to the arrow f28 -the filtering diaphragm 28, the little cone 20 and the filter can be inspected, which anyway can be disconnected from the support 26. The saddle 18 is completed by a closing sealing element, in such a way that the elbow of the siphon formed by duct 10 results in being lower than the maximum level that can be reached in the reservoir 16.

The reservoir 16 surrounding the real pot holder can be closed by an annular cover 30, which can be removed or even simply angularly displaced to allow the filling up of the reservoir itself. The reservoir is made accessible by the angular diaplacement of cover 30, since the external wall 16A of the reservoir 16 has a lateral spout 16B, that can be closed by the same cover, but that is made accessible by the above angular displacement (even very limited) of said cover 30. Anyway the cover 30 can be equipped also with an entrance possibly equipped with lips, through which the water will be able to be discharged to fill up the reservoir 16. The cover 30 can be a sieve type cover, to allow the possible humidity evolvment in the zone of the aerial vegetation of the plant resting on the pot holder 1, while preventing the view of the reservoir and the fall of leaves or other debris into it. Anyway the water feeding to the siphon is carried out through filtering means such as the filtering grid 28 and the filter 24.

The portion 16A and the relevant bottom of the reservoir 16 can be realized separately from the cup 1, even by ceramics or other. The cup 1 will rest or will be anchored by shrinkage and/or by cement to the portion 16, 16A. The cup 1 will be equipped with the inside or partially outside little well.

Once the filling up of the reservoir 16 has been completed, the siphon type duct 10 is automatically filled by water up to prime its working as siphon, and the water fills both the bottom of the pot holder 1 and the little well 3 up to the level controlled by the float; the flow of the water stops when said limited level has been reached in the pot holder, whereon the float floats, which constantly restores the level in the pot holder till the emptying of the reservoir 16.

The irrigation takes place in a rational way because of the constance of the level reached by the irrigating liquid in the bottom of the pot holder 1, which level can be also adjusted according to the type and the needs of the plant.

The presence of the reservoir 16 around the pot holder generates a suitable humidity of the zone wherein the plant is placed, also and especially when the plant is placed for example in an artificially heated room and then tending to a rather limited humidity in respect to the plant needs.

The capacity of the reservoir 16 can be increased by shaping the wall 1A as a truncated cone.

The little well can be realized partially external and partially internal to the wall 1A.

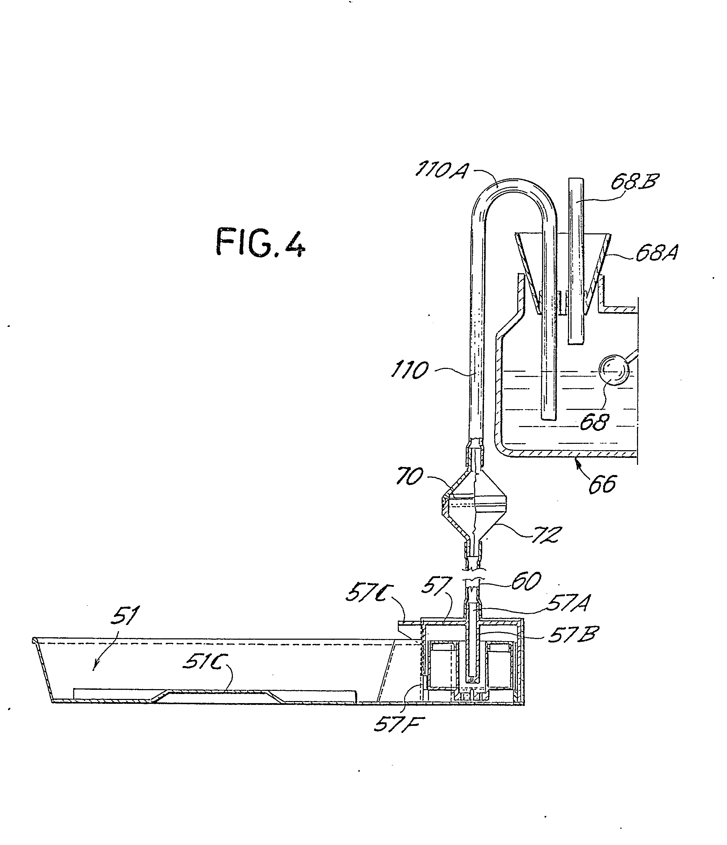

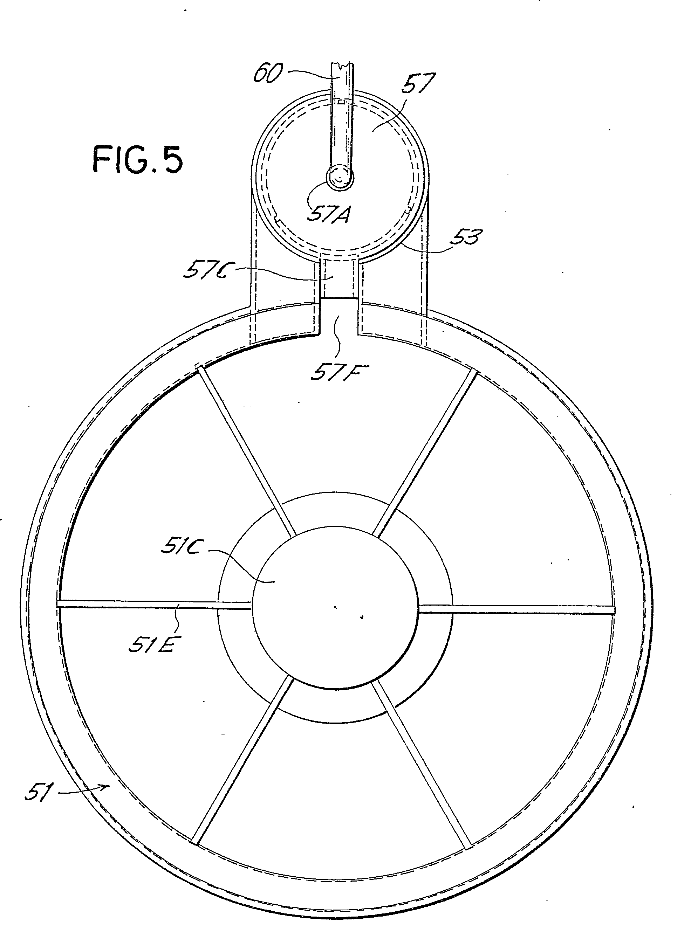

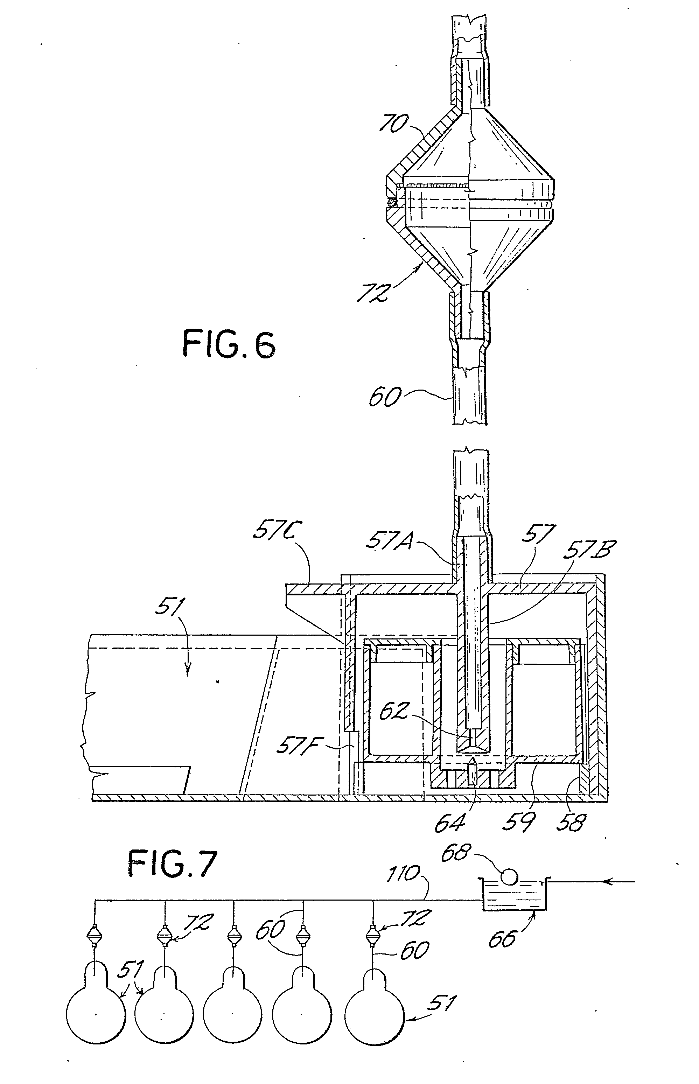

According to what is illustrated in Figs.4 to 7 of the enclosed drawing, numeral 51 indicates the pot holder itself having a perimetrical wall 51A and a bottom 51B with reliefs 51C and ribs 51E for supporting the pot. Flanking the perimetrical wall 51A a little well 53 is developed, which at the lower end communicates with the pot holder 51 through an opening 51F. Inside the little well 53 an inserted element 57 is fitted, developed as a cap, which can rest at preset positions depending also on the level that has to be reached inside the pot holder. Said inserted element 57 forms a housing wherein a float 59 can move. The inserted element 57 centrally forms an upper connection 57A for the feeding duct 60 of the irrigation liquid. On a lower extension 57B of the connection 57A a seat 62 is formed for a pin type plug 64, which is carried by the float 59 at the bottom of a central hollow 59A thereof; the appendix 57B forming the seat 62 extends into said hollow 59.

By this arrangement it is possible to adjust and maintain inside the pot holder 51 a desired and constant level of water or other irrigating liquid, by the effect of the float type plug 59, 64, that interrupts the flow of the liquid from the supply duct 60 when the level in the pot holder 51 and then in the little well 53 reaches a preset value depending on the position of seat 62; this position can be also adjusted through the positioning of the inserted element 57, that after the adjustment is kept at a fixed position but that can be removed for proper checks and for maintenance.

The duct 60 receives the liquid with a certain hydraulic head, and that can be obtained -rather than directly by the water supply network, because of security needs against possible risks of flooding -by an overhead reservoir 66 that can be fed at a constant level by a float type plug 68 of per se known type; the reservoir may be respectively a can type reservoir equipped with a stopper 68A and a siphon 110A, that can be primed -after the can has been filled up - by a little pressure exerced even by the mouth through the little pipe 68B.

Each duct 60 can be equipped with a filter 70, inserted in the same duct with a suitable sealing case 72.

The arrangement of the feeding with the reservoir 66 and the float 68 is suitable for the feeding of the irrigating liquid to a plurality of pot holders 51, each one being single or multiple. For this purpose a distribution manifold 110 can be provided, with single branches 60 equipped with single filters 72, unless a filter is provided at the feeding inlet of the cup 66.

The system is suitable for an use within the household scope or even in an handicraft or industrial premises. The possibility of a continuous restoration of the water in the cup-reservoir 66 assures the functionality both in terms of time and for any amount of consumption for the irrigation.

**Claims**

1) A pot holder irrigator characterized in that it includes, in combination with a cup type supporting base (1, 51) for at least one pot, a float (9, 59) with a pin type plug (14, 54) that controls the supply of irrigating liquid to the cup, in order to keep constant the level in the cup, wherein said float floats.

2) A pot holder irrigator as per claim 1, characterized in that it includes, in combination with a cup type supporting base - (1) for at least one pot, a reservoir (16) to feed the liquid for the irrigation; a siphon type duct (10) for the supply which can be primed as the reservoir has been completely filled up; and a float (9) with a pin type plug (14) that controls the supply coming from the siphon duct, in order to keep constant the level in the cup of the base supporting the pot or the pots.

3) A pot holder irrigator as per previous claims, characterized in that the reservoir (16) is developed annularly around the cup type base (1) supporting the pot or the pots.

4) A pot holder irrigator as per previous claims, characterized in that the reservoir (16) is closed by a cover (30) grid type or equivalent.

5) A pot holder irrigator as per previous claims, characterized in that the siphon duct (10) is mounted on a saddle (18) of the wall of a little well (3) placed along the reservoir (16) and communicating with said cup (1), in which little well (3) an inserted element is fitted (7) which forms the seat (12) whereon the pin type plug (14) acts and a connection (7A) for the siphon type duct (10); said inserted element (7) being suitable to be adjusted at the proper position in the little well (3) in order to adjust the level in the cup supporting the pot or the pots.

6) A pot holder irrigator as per previous claims, characterized in that said inserted element (7) is developed as a cap and forms the housing wherein the float (9) moves.

7) A pot holder irrigator as per previous claims, characterized in that the siphon type duct (10) is mounted on a removable filtering diaphragm (28), that supports a conical drawing orifice (20) of the siphon type duct (10).

8) A pot holder irrigator as per previous claims, characterized in that the float (9) has a central hollow (9A), with a bored bottom wherein the pin type plug (14) is placed; in said hollow (9A) an appendix (7B) of the inserted element (7) being developed at the end of which the seat-whereon the pin acts-is formed.

9) A pot holder irrigator as per previous claims, characterized in that the reservoir and the cup are formed by separate components, even made of heterogeneous materials.

10) A pot holder as per previous claims, characterized in that the wall of the cup, surrounded by the reservoir is shaped as a truncated cone, with an increase of the reservoir capacity.

11) An irrigator plant for a plurality of pot holders, each one with a cup type supporting base (51) for at least one pot according at least to claim 1, characterized in that it includes in combination: an overhead tank (66); a network of ducts for the distribution of the liquid by fall for the supply, with filtering means; and in combination with each pot holder a float (59) with pin type plug which controls the supply coming from the network of distribution ducts, to keep constant the level in the cup of the respective base (51) supporting the pot or the pots.

12) An irrigator plant as per claim 11, characterized in that it includes a reservoir (66) at a constant level with float type plug (59, 64), fed by the water supply network and placed at an overhead position, to supply the irrigating liquid.

13) An irrigator plant as per claim 11, characterized in that it includes a siphon combined with the reservoir, which can be primed by overpressure, to supply the irrigating liquid.

14) An irrigator plant as per claims 11 to 13, characterized in that on each branch of the network for the supply to a respective pot holder a filtering means (72) is provided.

15) An irrigator plant as per claims 11 to 14 characterized in that each distribution duct reaches a little well flanking the cup of the supporting base (51) and communicating with said cup, in which well an inserted element (57), that forms the seat (62) whereon the pin type plug (64) acts and a connection for the feeding duct of the network, is housed; said inserted element being able to be adjusted at the proper position in the little well, to adjust the level in the cup supporting the pot or the pots.

16) An irrigator plant as per claims 11 to 15, characterized in that said inserted element (57) is developed as a cap to form the housing for the float (59).

17) An irrigator plant as per claims 11 to 16, characterized in that the float (59) has a central hollow, with a bored bottom wherein the pin type plug (64) is placed; in said hollow an appendix of the inserted element being developed, at the end of which appendix the seat whereon the pin acts upwards, is formed.

# FIG.1

0 194 235

FIG. 2

# FIG.3

# FIG.4

FIG.5

60 57

57A

53

57C

57F

51C

51E

51

0 194 235

FIG.6

FIG.7